# EUROPEAN PATENT SPECIFICATION

(11) **EP 4 389 476 B1**
(45) Date of publication and mention of the grant of the patent: **24.06.2026**
(21) Application number: 23217583.6
(22) Date of filing: 18.12.2023
(51) Int. Cl.: B60H 1/00, B60H 1/32, B60P 3/20, F25D 29/00

(54) **TRANSPORT REFRIGERATION UNIT, AND SYSTEM AND METHOD FOR AUTOMATICALLY SWITCHING FROM FIRST POWER MODE TO SECOND POWER MODE OF TRANSPORT REFRIGERATION UNIT**
TRANSPORTKÜHLEINHEIT SOWIE SYSTEM UND VERFAHREN ZUM AUTOMATISCHEN UMSCHALTEN VON EINEM ERSTEN LEISTUNGSMODUS IN EINEN ZWEITEN LEISTUNGSMODUS EINER TRANSPORTKÜHLEINHEIT
UNITÉ DE RÉFRIGÉRATION DE TRANSPORT, ET SYSTÈME ET PROCÉDÉ DE COMMUTATION AUTOMATIQUE D'UN PREMIER MODE DE PUISSANCE À UN SECOND MODE DE PUISSANCE D'UNE UNITÉ DE RÉFRIGÉRATION DE TRANSPORT

(30) Priority: 19.12.2022 US 202263476007 P
(43) Date of publication of application: 26.06.2024
(73) Proprietor: Carrier Corporation, Palm Beach Gardens, FL 33418 (US)
(72) Inventor: BEAUFRERE, Florian, Rouen (FR)
(74) Representative: Dehns

(56) References cited:
- EP-B1- 3 543 046
- WO-A1-2014/106060

## Description

### CROSS-REFERENCE TO RELATED APPLICATION

This patent application claims the benefit of US Provisional Patent Application No. 63/476,007, filed on Dec 19, 2022.

### TECHNICAL FIELD

This invention relates to marine transportation of transport refrigeration units, and more particularly, to a means to improve safety of transport refrigeration units during marine transport.

### BACKGROUND

A transport refrigeration unit (TRU) is an apparatus for cooling or refrigerating commodities during transport. The TRU may be coupled to a container or trailer. A truck may be used to move a trailer or a container (the container may be loaded on a trailer). The TRU draws electrical power for operation from a diesel or gas engine. Specifically, the electrical power to the TRU may be supplied from an engine of a truck or an engine that runs a generator for the TRU. The commodities to be transported may also, in some instances, be required to be transported via marine transport, such as a ship. However, to avoid potential hazards due to fire, ships forbid operation of fuel engines. As a result, the TRU may not be supplied electric power through the engine associated with the truck or the generator. The TRU may instead be electrically coupled to a grid associated with the ship, through a stand-by plug. The grid on the ship is supplied electric power through generators present on the ships. The grid may supply single or three phase electrical power. Further, the grid may provide different ranges of power, such as 400 V/50 Hz, 230 V/50 Hz, 230 V/60 Hz, 120 V/60 Hz, etc. Conventionally, it is required to manually operate the TRU to change its power mode from a state where it is connected to the truck to a state where it is connected to the ship. The manual operation may occur through a switch or by changing the mode through the TRU interface (such as a human-machine interface of the TRU).

EP 3543046 B1 describes a method and a system for managing power in a TRU installed on a trailer. The system comprises a TRU controller configured to execute a range extender mode of operation to manage operations of the TRU and TRU components. The TRU controller is configured to select a power management strategy from a plurality of demand-side power management strategies, determine operational parameters for the TRU from the selected power management strategy, and execute the determined operational parameters.

### SUMMARY

According to a first aspect of the invention there is provided a system for automatically switching from a first power mode to a second power mode of a transport refrigeration unit (TRU). The system includes a processor communicably coupled to a memory storing instructions executable by the processor. The processor is configured to activate a geo-fencing mode of the TRU operating in the first power mode. The activation of the geo-fencing mode triggers a continuous and automatic determination of geo-location coordinates of the TRU. The processor is further configured to determine if the TRU is on board a marine vessel in a first geographical region responsive to the activation of the geo-fencing mode. The processor is further configured to automatically switch from the first power mode to the second power mode for the TRU based on a positive determination. The first power mode corresponds to a combustion-driven power source and the second power mode corresponds to a stand-by power source.

Optionally, in order to determine if the TRU is on board the marine vessel in the first geographical region, the processor may be configured to determine the geo-location coordinates of the TRU based on a first set of data received from a geo-positioning server in communication with the system. In order to determine if the TRU is on board the marine vessel in the first geographical region, the processor may be configured to determine whether the geo-location coordinates indicate a location of the TRU within the first geographical region.

Optionally, the first set of data includes global positioning system (GPS) coordinates of the TRU and geo-fencing metadata associated with the first geographical region.

Optionally, the processor may be configured to determine whether the geo-fencing mode is activated or not during the operation of the TRU in the first power mode.

Optionally, the processor activates the geo-fencing mode of the TRU in response to a user input.

Optionally, the processor activates the geo-fencing mode of the TRU in response to an automatic determination of whether the TRU is within the first geographical region.

Optionally, the stand-by power source includes any one of a generator and a grid network onboard the marine vessel, and a stand-alone power storage device associated with the TRU.

Optionally, the processor may be configured to display, on a display device, information associated with a current mode of operation of the TRU. The current mode of operation may correspond to one of the first power mode or the second power mode.

Optionally, the processor may be configured to provide one or more of an audio annunciator output and a visual annunciator output when the processor automatically switches from the first power mode to the second power mode for the TRU.

Optionally, the processor may be configured to determine if the TRU is outside of the first geographical region. The processor may be configured to automatically switch from the second power mode to the first power mode for the TRU based at least in part on the determination that the TRU is outside of the first geographical region.

Optionally, the processor may be configured to automatically switch from the second power mode to the first power mode for the TRU based at least in part on the determination that the combustion-driven power source is connected to the TRU subsequent to a positive determination that the TRU is outside of the first geographical region.

According to a further aspect of the invention there is provided a method for automatically switching from a first power mode to a second power mode of a transport refrigeration unit (TRU). The method includes activating, by a geo-fencing activation engine, a geo-fencing mode of the TRU operating in the first power mode. The activation of the geo-fencing mode triggers a continuous and automatic determination of geo-location coordinates of the TRU. The method further includes determining, by a location determination engine, if the TRU is on board a marine vessel in a first geographical region responsive to the activation of the geo-fencing mode. The method further includes automatically switching, by a power mode switching engine, from the first power mode to the second power mode for the TRU based on a positive determination. The first power mode corresponds to a combustion-driven power source and the second power mode corresponds to a stand-by power source.

Optionally, in order to determine if the TRU is on board the marine vessel in the first geographical region, the method may include determining, by the location determination engine, the geo-location coordinates of the TRU based on a first set of data received from a geo-positioning server. In order to determine if the TRU is on board the marine vessel in the first geographical region, the method may include determining, by the location determination engine, whether the geo-location coordinates indicate a location of the TRU within the first geographical region.

Optionally, the first set of data includes global positioning system (GPS) coordinates of the TRU and geo-fencing metadata associated with the first geographical region. The method may include determining, by the geo-fencing activation engine, whether the geo-fencing mode is activated or not during the operation of the TRU in the first power mode.

Optionally, the method may include activating, by the geo-fencing activation engine, the geo-fencing mode of the TRU in response to a user input.

Optionally, the method may include activating, by the geo-fencing activation engine, the geo-fencing mode of the TRU in response to an automatic determination of whether the TRU is within the first geographical region by the location determination engine.

Optionally, the method may include displaying, by a user interface (UI) engine, on a display device information associated with a current mode of operation of the TRU. The current mode of operation may correspond to one of the first power mode or the second power mode.

Optionally, the method may include providing one or more of an audio annunciator output and a visual annunciator output, by an audio-visual engine, upon automatically switching from the first power mode to the second power mode for the TRU.

Optionally, the method may include determining, by the location determination engine, if the TRU is outside of the first geographical region. The method may include automatically switching, by the power mode switching engine, from the second power mode to the first power mode for the TRU based at least in part on the determination that the TRU is outside of the first geographical region.

Optionally, the method may include automatically switching, by the power mode switching engine, from the second power mode to the first power mode for the TRU based at least in part on the determination that the combustion-driven power source is connected to the TRU subsequent to a positive determination that the TRU is outside of the first geographical region.

According to a further aspect of the invention there is provided a transport refrigeration unit (TRU). The TRU includes a processor communicably coupled to a memory storing instructions executable by the processor. The processor is configured to activate a geo-fencing mode of the TRU operating in the first power mode. The activation of the geo-fencing mode triggers a continuous and automatic determination of geo-location coordinates of the TRU. The processor is further configured to determine if the TRU is on board a marine vessel in a first geographical region responsive to the activation of the geo-fencing mode. The processor is further configured to automatically switch from the first power mode to the second power mode for the TRU based on a positive determination. The first power mode corresponds to a combustion-driven power source and the second power mode corresponds to a stand-by power source.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the subject disclosure of this invention and are incorporated in and constitute a part of this specification. The drawings illustrate exemplary embodiments of the subject disclosure and, together with the description, serve to explain, by way of example only, the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 is a schematic block diagram of a network architecture including a system for automatically switching from a first power mode to a second power mode of a transport refrigeration unit;
FIG. 2 is a detailed schematic block diagram of the system for automatically switching from the first power mode to the second power mode of the transport refrigeration unit;
FIG. 3 is an exemplary representation of a first geographical region obtained from a first set of data relating to a location of the transport refrigeration unit;
FIG. 4 is a schematic flow diagram for a method for automatically switching from the first power mode to the second power mode of the transport refrigeration unit; and
FIG. 5 is an exemplary schematic block diagram of a hardware system used for implementing the system of FIG. 2.

### DETAILED DESCRIPTION

The following is a detailed description of embodiments depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

A transport refrigeration unit (TRU) is an apparatus for cooling or refrigerating commodities during transport. Generally, the TRU is mounted on or coupled to a container or trailer. A diesel or gas engine may supply electricity for the operation of the TRU. For example, the engine of a truck coupled to the trailer may provide electricity for the operation of the TRU. In some cases, an engine associated with the TRU may drive a generator which supplies electricity for the operation of the TRU.

The commodities to be transported may also, in some instances times, be required to be transported via marine transport, such as a ship. However, to avoid potential hazards, ships forbid use of fuel driven generators. As a result, the TRU may not be supplied electric power through fuel driven generators associated with the truck or TRU. The TRU may instead be electrically coupled to a grid associated with the ship. The grid on the ship is supplied electric power through generators present on the ship. Conventionally, the power mode of the TRU must be manually changed from a state where it is connected to the fuel driven generator to a state where it is connected to the ship. There may be instances where the manual changeover may be missed, which may lead to potentially hazardous conditions on the ship. There is, therefore, a need for a means to automatically switch between power modes of the TRU when the TRU is located on a ship.

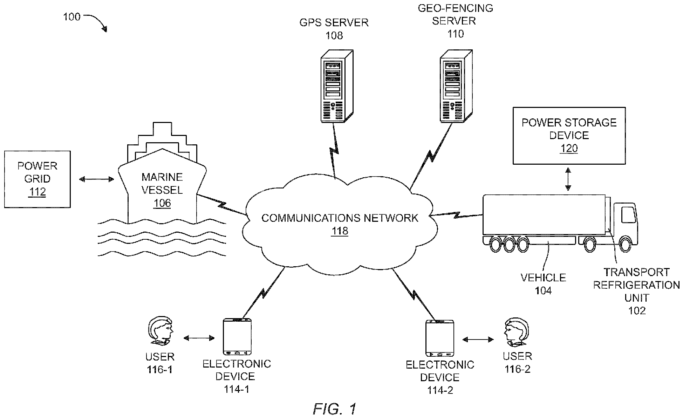

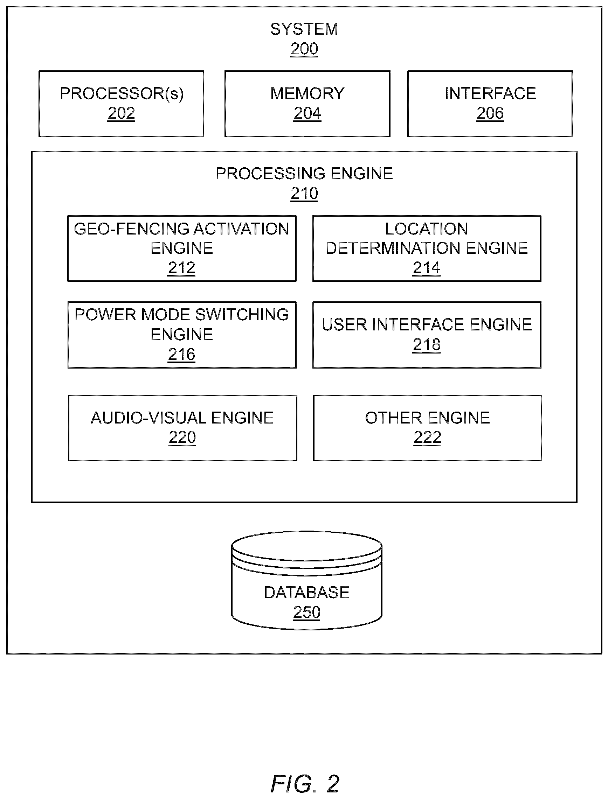

Referring to FIG. 1, a schematic block diagram of a network architecture 100 including a system 200 for automatically switching from a first power mode to a second power mode of a transport refrigeration unit (TRU) 102 is shown. The network architecture 100 includes a TRU 102 associated with a vehicle 104. The TRU 102 may have the system 200 implemented in it. The system 200 is shown in FIG. 2. The network architecture 100 may further include a marine vessel 106 which is adapted to transport the TRU 102 over a waterbody. The system 200 in the TRU 102 may be configured to determine a current location of the TRU 102. Specifically, the system 200 may be configured to determine if the TRU 102 is currently located on the marine vessel 106. The network architecture 100 further includes servers configured to provide data to the system 200 to enable the system 200 to determine the current location of the TRU 102. Specifically, the network architecture 100 includes a global positioning system (GPS) server 108 and a geo-fencing (GF) server 110. The system 200, the TRU 102, the marine vessel 106, and the GPS and GF servers 108, 110 are communicably coupled to each other via a communications network 118. The GPS and GF servers 108, 110 may be any, such as, without limitations, a stand-alone server, a remote server, cloud computing server, a dedicated server, a rack server, a server blade, a server rack, a bank of servers, a server farm, hardware supporting a part of a cloud service or system, a home server, hardware running a virtualized server, one or more processors executing code to function as a server, one or more machines performing server-side functionality as described herein, at least a portion of any of the above, some combination thereof, and the like. The communications network 118 may be a wired communication network or a wireless communication network. The wireless communication network may be any wireless communication network capable to transfer data between entities of that network such as, but are not limited to, a carrier network including circuit switched network, a public switched network, a Content Delivery Network (CDN) network, a Long-Term Evolution (LTE) network, a Global System for Mobile Communications (GSM) network and a Universal Mobile Telecommunications System (UMTS) network, an Internet, intranets, local area networks, wide area networks, mobile communication networks, combinations thereof, and the like.

The GPS server 108 may be communicably coupled to a network (not shown) of GPS satellites and to GPS sensors (not shown) located on the TRU 102 to determine a current location of the TRU 102. The GF server 110 may be communicably coupled to a database containing a map of a region where the TRU 102 is currently located. Specifically, the GF server 110 may include data to distinguish between land mass and water mass in the map of the region. When the GPS and GF servers 108, 110 include data indicating that the TRU is on the land, it may be inferred that the TRU 102 is coupled to the vehicle 104 and is operating from electric power supplied by the vehicle 104. When the GPS and GF servers 108, 110 include data indicating that the TRU 102 is on a waterbody, it may be inferred that the TRU 102 is located within the marine vessel 106, and now may not receive the electric power from the vehicle 104.

The network architecture 100 may further include a power grid 112 located on the marine vessel 106. The power grid 112 may receive electric power from a generator present on the marine vessel. When the TRU 102 is located in the marine vessel 106, the TRU may be powered by the power grid 112. When the TRU 102 is receiving electric vehicle from an electric source associated with the vehicle 104, the TRU 102 may be operating in a first power mode. When the TRU 102 is receiving electric power from the power grid 112 of the marine vessel 106, the TRU 102 may be operating in a second power mode.

In some embodiments, the vehicle 104 may include a stand-alone power storage device 120. The stand-alone power storage device 120 may be any device that is capable of storing electric power and may operate without combustion-based technologies. In one example, the power storage device 120 may be a battery bank. In some embodiments, when the TRU 102 is operating in the second power mode, the TRU 102 may be electrically coupled to the power storage device 120 and may receive electric power therefrom.

The network architecture 100 may further include one or more electronic devices, such as electronic devices 114-1, 114-2. The electronic devices 114-1, 114-2 may be associated with respective users 116-1, 116-2. The electronic devices 114-1, 114-2 may be communicably coupled to the components of the network architecture 100 through the communications network 120. The electronic devices 114-1, 114-2 may be used to provide input to any one or more of the components of the network architecture 100. In some instances, the electronic devices 114-1, 114-2 may include audio-visual devices, such as display screens, LED lighting displays, speakers, etc. The electronic devices 114-1, 114-2 may be any electrical, electronic, electromechanical, and computing device. The electronic devices 114-1, 114-2 may include, without limitations, a mobile device, a smart phone, a Personal Digital Assistant (PDA), a tablet computer, a phablet computer, a wearable device, a Virtual Reality/Augment Reality (VR/AR) device, a laptop, a desktop, and the like.

The system 200 may be implemented by way of a single device or a combination of multiple devices that may be communicably coupled or networked together. In one instance, the system 200 may be implemented by way of standalone device and may be communicably coupled to the TRU 102. In another instance, the system 200 may be implemented in the TRU 102. The system 200 may be implemented in hardware or a suitable combination of hardware and software.

Further, the system 200 may also include other units such as a display unit, an input unit, an output unit and the like; however, the same are not shown in the FIG. 1, for the purpose of clarity. Also, in FIG. 1, only few units are shown; however, the system 200 may include multiple such units or the system 200 may include any such numbers of the units, obvious to a person skilled in the art or as required to implement the features of the present invention. The system 200 may be a hardware device including a processor executing machine-readable program instructions. The "hardware" may include a combination of discrete components, an integrated circuit, an application-specific integrated circuit, a field programmable gate array, a digital signal processor, or other suitable hardware. The "software" may comprise one or more objects, agents, threads, lines of code, subroutines, separate software applications, two or more lines of code or other suitable software structures operating in one or more software applications or on one or more processors. The processor may include, for example, without limitations, microprocessors, microcomputers, microcontrollers, digital signal processors, central processing units, state machines, logic circuits, any devices that manipulate data or signals based on operational instructions, and the like. Among other capabilities, the processor may fetch and execute computer-readable instructions in the memory operationally coupled with the system 200 for performing tasks such as data processing, input/output processing, feature extraction, and/or any other functions. Any reference to a task in the present disclosure may refer to an operation being or that may be performed on data.

Referring to FIG. 2, a detailed schematic block diagram of the system 200 is shown. The system 200 includes a processor 202, and a memory 204 communicably coupled to the processor 202. The memory 204 may store instructions executable by the processor 202 to implement the system 200. The system 200 further includes an interface 206. The interface 206 may include a variety of interfaces, for example, interfaces for data input and output devices, referred to as I/O devices, storage devices, and the like. The interface 206 may also provide a communication pathway for one or more components of the system 200. Examples of such components include, but are not limited to, the processing engine 210 and a database 250.

Referring now to FIGs. 1 and 2, in some embodiments, the processor 202 and memory 204 may be part of a telematic device that is coupled to the TRU 102. The telematic device may include geo-fencing mode and may be communicably coupled to the GF server 110.

In some embodiments, the system 200 includes the processing engine 210. The processing engine 210 may be implemented as a combination of hardware and programming (for example, programmable instructions) to implement one or more functionalities of the processing engine 210. In some examples, the processing engine 210 may be implemented by electronic circuitry.

The processing engine 210 may include a geo-fencing activation engine 212, a location determination engine 214, a power mode switching engine 216, a user interface engine 218, an audio-visual engine 220, and other engine(s) 222. The other engine(s) 222 may include engines configured to perform one or more functions ancillary functions associated with the processing engine 210.

The geo-fencing activation engine 212 is configured to activate a geo-fencing mode in the TRU 102. The geo-fencing mode of the TRU 102 may be activated when the TRU 102 is operating in the first power mode, i.e., the TRU 102 is receiving electric power from the vehicle 104. In some embodiments, the geo-fencing activation engine 212 is further configured to determine if the geo-fencing mode is activated or not, during the operation of the TRU 102 in the first power mode. In some embodiments, the geo-fencing activation engine 212 is configured to activate the geofencing mode of the TRU 102 in response to a user input. In an example, the user input may be received by the geo-fencing activation engine 212 via the interface 206, from any one of the electronic devices 114-1, 114-2.

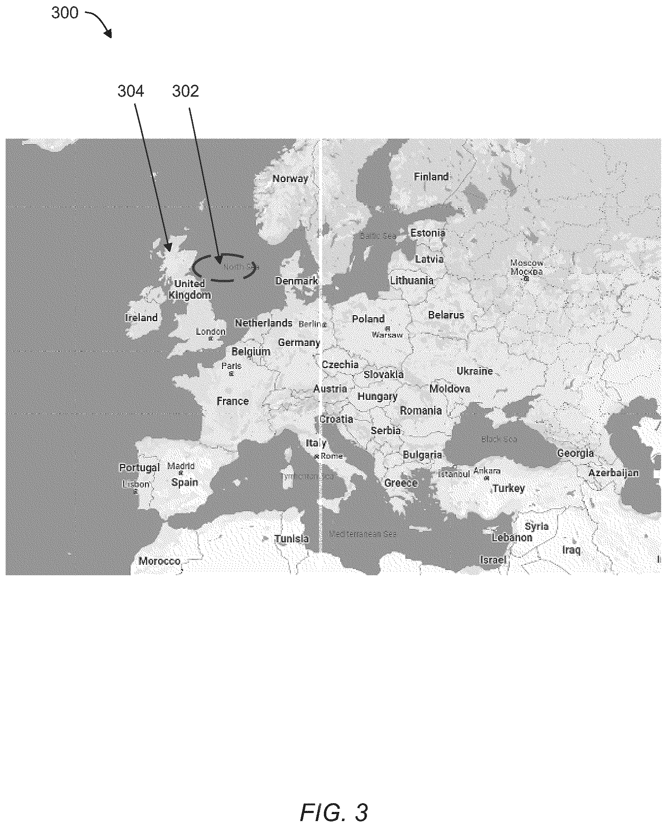

The location determination engine 214 is configured to determine if the TRU 102 is on board the marine vessel 106 in a first geographical region responsive to the activation of the geo-fencing mode of the TRU 102 by the geo-fencing activation engine 212. In some embodiments, the first geographical region corresponds to a region indicative of a waterbody (such as a first geographic region 302 of FIG. 3). In some other embodiments, the first geographical region may correspond to any user-defined region where it may be required for the TRU 102 to be connected to the stand-by power source. In some embodiments, in order to determine if the TRU 102 is on board the marine vessel 106 in the first geographical region, the location determination engine 214 is further configured to determine geo-location coordinates of the TRU 102 based on a first set of data received from the GPS server 108. The location determination engine 214 is further configured to determine if the geo-location coordinates of the TRU 102 indicate a location of the TRU 102 within the first geographical region. In some embodiments, the first set of data includes GPS coordinates of the TRU 102 and geo-fencing metadata associated with the first geographical region. In some embodiments, the geo-fencing activation engine 212 is configured to activate the geo-fencing mode of the TRU 102 in response to an automatic determination that the TRU 102 is within the first geographical region, by the location determination engine 214.

The power mode switching engine 216 is configured to automatically switch from the first power mode of the TRU 102 to its second power mode based on a positive determination of location of the TRU 102 within the first geographical region.

In some embodiments, the location determination engine 214 is further configured to determine if the TRU 102 is outside of the first geographical region. Responsive to the positive determination by the location determination engine 214 that the TRU 102 is outside of the first geographical region, the power mode switching engine 216 is configured to automatically switch from the second power mode of the TRU 102 to the first power mode. In some embodiments, the power switching engine 216 is further configured to automatically switch from the second power mode of the TRU 102 to the first power mode based at least in part on the determination that the combustion-driven power source is connected to the TRU 102 subsequent to the positive determination that the TRU 102 is outside of the first geographical region.

The user interface engine 218 is configured to display, on a display device, information associated with a current mode of operation of the TRU 102. The current mode of operation may correspond to any one of the first power mode and the second power mode.

The audio-visual engine 220 is configured to provide one or more of an audio annunciator output and a visual annunciator output upon automatically switching from the first power mode to the second power mode for the TRU 102. In some embodiments, the audio-visual engine 220 is configured to provide one or more of the audio annunciator output and the visual annunciator output upon automatically switching from the second power mode to the first power mode for the TRU 102.

Referring to FIG. 3, an exemplary representation the first set of data associated with a first geographical region is shown. FIG. 3 specifically illustrates a map including waterbodies and landmasses. The first set of data includes geo-fence metadata provided by the GF server 110 (shown in FIG. 1). From this data, it may be determined that the region 302 indicates a water body, and the region 304 indicates a land mass.

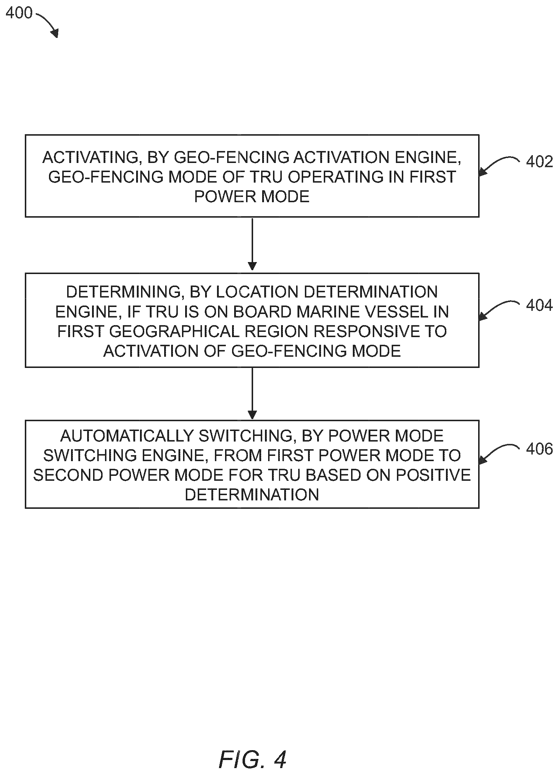

Referring to FIG. 4, a schematic flow diagram for a method 400 for automatically switching from the first power mode to the second power mode of the TRU 102 is shown. Referring now to FIGs. 1, 2 and 4, at step 402, the method 400 includes activating, by the geo-fencing activation engine 212, the geo-fencing mode of the TRU 102 operating in the first power mode. The activation of the geo-fencing mode triggers a continuous and automatic determination of geo-location coordinates of the TRU 102. At step 402, the method 400 includes determining, by the location determination engine 214, if the TRU 102 is on board the marine vessel 106 in the first geographical region responsive to the activation of the geo-fencing mode. At step 406, the method 400 includes automatically switching, by power mode switching engine 216, from the first power mode to the second power mode for the TRU 102 based on the positive determination. The first power mode corresponds to a combustion-driven power source and the second power mode corresponds to a stand-by power source.

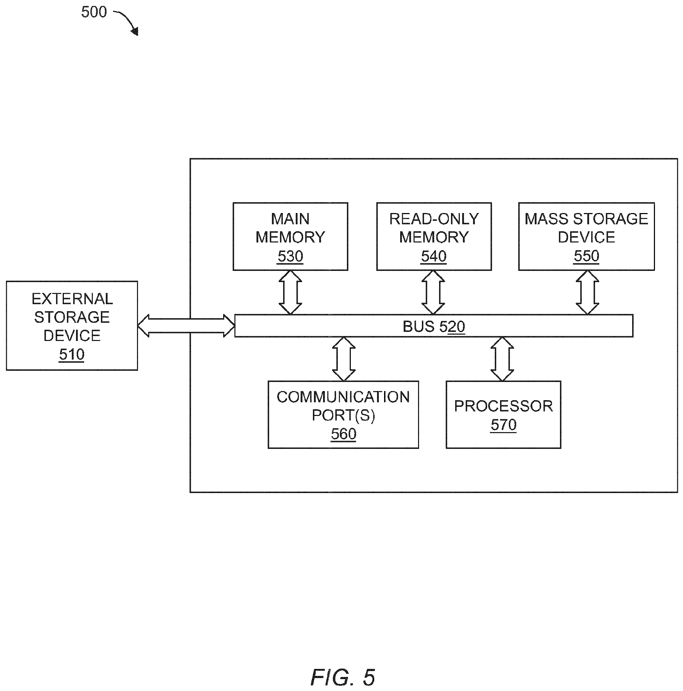

FIG. 5 is an exemplary schematic block diagram of a hardware system used for implementing the system 200. As shown in FIG. 5, a computer system 500 can include an external storage device 510, a bus 520, a main memory 530, a read only memory 540, a mass storage device 550, communication port 560, and a processor 570. A person skilled in the art will appreciate that the computer system may include more than one processor and communication ports. Examples of processor 570 include, but are not limited to, an Intel^{®} Itanium^{®} or Itanium 2 processor(s), or AMD^{®} Opteron^{®} or Athlon MP^{®} processor(s), Motorola^{®} lines of processors, FortiSOC^{™} system on chip processors or other future processors. Processor 570 may include various modules. Communication port 560 can be any of an RS-232 port for use with a modem-based dialup connection, a 10/100 Ethernet port, a Gigabit or 10 Gigabit port using copper or fibre, a serial port, a parallel port, or other existing or future ports. Communication port 560 may be chosen depending on a network, such a Local Area Network (LAN), Wide Area Network (WAN), or any network to which computer system connects. Memory 530 can be Random Access Memory (RAM), or any other dynamic storage device commonly known in the art. Read-only memory 540 can be any static storage device(s) e.g., but not limited to, a Programmable Read Only Memory (PROM) chips for storing static information e.g., start-up or BIOS instructions for processor 570. Mass storage 550 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc.

Bus 520 communicatively couples processor(s) 570 with the other memory, storage, and communication blocks. Bus 520 can be, e.g., a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 570 to software system.

Optionally, operator and administrative interfaces, e.g., a display, keyboard, and a cursor control device, may also be coupled to bus 520 to support direct operator interaction with a computer system. Other operator and administrative interfaces can be provided through network connections connected through communication port 560. The external storage device 510 can be any kind of external hard-drives, floppy drives, IOMEGA^{®} Zip Drives, Compact Disc - Read Only Memory (CD-ROM), Compact Disc-Re-Writable (CD-RW), Digital Video Disk-Read Only Memory (DVD-ROM). Components described above are meant only to exemplify various possibilities. In no way should the aforementioned exemplary computer system limit the scope of the present disclosure.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A system (200) for automatically switching from a first power mode to a second power mode of a transport refrigeration unit (TRU) (102), the system comprising:
a processor (202) communicably coupled to a memory (204) storing instructions executable by the processor and configured to:
activate a geo-fencing mode of the TRU operating in the first power mode, wherein the activation of the geo-fencing mode triggers a continuous and automatic determination of geo-location coordinates of the TRU;
determine if the TRU is on board a marine vessel (106) in a first geographical region responsive to the activation of the geo-fencing mode; and
automatically switch from the first power mode to the second power mode for the TRU based on a positive determination, wherein the first power mode corresponds to a combustion-driven power source and the second power mode corresponds to a stand-by power source.

2. The system (200) of claim 1, wherein, in order to determine if the TRU (102) is on board the marine vessel (106) in the first geographical region, the processor (202) is configured to:
determine the geo-location coordinates of the TRU based on a first set of data received from a geo-positioning server (108) in communication with the system; and
determine whether the geo-location coordinates indicate a location of the TRU within the first geographical region; optionally
wherein the first set of data comprises global positioning system (GPS) coordinates of the TRU (102) and geo-fencing metadata associated with the first geographical region.

3. The system (200) of any preceding claim, wherein the processor (202) is further configured to determine whether the geo-fencing mode is activated or not during the operation of the TRU (102) in the first power mode.

4. The system (200) of any preceding claim, wherein the processor (202) activates the geo-fencing mode of the TRU (102) in response to a user (116) input; and/or
wherein the processor (202) activates the geo-fencing mode of the TRU (102) in response to an automatic determination of whether the TRU is within the first geographical region.

5. The system (200) of any preceding claim, wherein the stand-by power source comprises any one of a generator and a grid network (112) onboard the marine vessel (106), and a stand-alone power storage device (120) associated with the TRU (102).

6. The system (200) of any preceding claim, wherein the processor (202) is further configured to display on a display device (114) information associated with a current mode of operation of the TRU (102), wherein the current mode of operation corresponds to one of the first power mode or the second power mode; and/or
wherein the processor (202) is further configured to provide one or more of an audio annunciator output and a visual annunciator output when the processor automatically switches from the first power mode to the second power mode for the TRU (102).

7. The system (200) of any preceding claim, wherein the processor (202) is further configured to:
determine if the TRU (102) is outside of the first geographical region; and
automatically switch from the second power mode to the first power mode for the TRU based at least in part on the determination that the TRU is outside of the first geographical region.

8. The system (200) of any preceding claim, wherein the processor (202) is further configured to:
automatically switch from the second power mode to the first power mode for the TRU (102) based at least in part on the determination that the combustion-driven power source is connected to the TRU subsequent to a positive determination that the TRU is outside of the first geographical region.

9. A method (400) for automatically switching from a first power mode to a second power mode of a transport refrigeration unit (TRU) (102), the method comprising:
activating, by a geo-fencing activation engine (212), a geo-fencing mode of the TRU operating in the first power mode, wherein the activation of geo-fencing mode triggers a continuous and automatic determination of geo-location coordinates of the TRU;
determining, by a location determination engine (214), if the TRU is on board a marine vessel (106) in a first geographical region responsive to the activation of the geo-fencing mode; and
automatically switching, by a power mode switching engine (216), from the first power mode to the second power mode for the TRU based on a positive determination, wherein the first power mode corresponds to a combustion-driven power source and the second power mode corresponds to a stand-by power source.

10. The method (400) of claim 9, wherein, in order to determine if the TRU (102) is on board the marine vessel (106) in the first geographical region, the method further comprises:
determining, by the location determination engine (214), the geo-location coordinates of the TRU based on a first set of data received from a geo-positioning server (108); and
determining, by the location determination engine (214), whether the geo-location coordinates indicate a location of the TRU within the first geographical region; optionally
wherein the first set of data comprises global positioning system (GPS) coordinates of the TRU (102) and geo-fencing metadata associated with the first geographical region,
wherein the method further comprising determining, by the geo-fencing activation engine, whether the geo-fencing mode is activated or not during the operation of the TRU in the first power mode.

11. The method (400) of claim 9 or 10, further comprising activating, by the geo-fencing activation engine (212), the geo-fencing mode of the TRU (102) in response to an automatic determination of whether the TRU is within the first geographical region by the location determination engine (214).

12. The method of any of claims 9 to 11, further comprising displaying, by a user interface (UI) engine (218), on a display device (114) information associated with a current mode of operation of the TRU (102), wherein the current mode of operation corresponds to one of the first power mode or the second power mode; and/or
further comprising providing one or more of an audio annunciator output and a visual annunciator output, by an audio-visual engine (220), upon automatically switching from the first power mode to the second power mode for the TRU.

13. The method (400) of any of claims 9 to 12, further comprising:
determining, by the location determination engine (214), if the TRU (102) is outside of the first geographical region; and
automatically switching, by the power mode switching engine (216), from the second power mode to the first power mode for the TRU based at least in part on the determination that the TRU is outside of the first geographical region.

14. The method (400) of any of claims 9 to 13, further comprising:
automatically switching, by the power mode switching engine (216), from the second power mode to the first power mode for the TRU (102) based at least in part on the determination that the combustion-driven power source is connected to the TRU subsequent to a positive determination that the TRU is outside of the first geographical region.

15. A transport refrigeration unit (TRU) comprising the system of any of claims 1 to 8.

## Patentansprüche

1. System (200) zum automatischen Umschalten einer Transportkühleinheit (TRU) (102) von einem ersten Leistungsmodus in einen zweiten Leistungsmodus, wobei das System Folgendes umfasst:
einen Prozessor (202), der kommunikativ mit einem Speicher (204) gekoppelt ist, der vom Prozessor ausführbare Anweisungen speichert, und zu Folgendem konfiguriert ist:
Aktivieren eines Geofencing-Modus der TRU in dem ersten Leistungsmodus, wobei die Aktivierung des Geofencing-Modus eine kontinuierliche und automatische Bestimmung von Geolokalisierungskoordinaten der TRU auslöst;
Bestimmen, ob sich die TRU an Bord eines Wasserfahrzeugs (106) in einer ersten geografischen Region befindet, als Reaktion auf die Aktivierung des Geofencing-Modus; und
automatisches Umschalten von dem ersten Leistungsmodus in den zweiten Leistungsmodus für die TRU basierend auf einer positiven Bestimmung, wobei der erste Leistungsmodus einer mittels Verbrennung betriebenen Leistungsquelle entspricht und der zweite Leistungsmodus einer Notleistungsquelle entspricht.

2. System (200) nach Anspruch 1, wobei der Prozessor (202), um zu bestimmen, ob sich die TRU (102) an Bord des Wasserfahrzeugs (106) in der ersten geografischen Region befindet, zu Folgendem konfiguriert ist:
Bestimmen der Geolokalisierungskoordinaten der TRU basierend auf einem ersten Datensatz, der von einem Geopositionierungsserver (108) in Kommunikation mit dem System empfangen wird; und
Bestimmen, ob die Geolokalisierungskoordinaten einen Standort der TRU innerhalb der ersten geografischen Region anzeigen; optional
wobei der erste Datensatz Koordinaten der TRU (102) von einem globalen Positionierungssystem (GPS) und mit der ersten geografischen Region verknüpfte Geofencing-Metadaten umfasst.

3. System (200) nach einem der vorhergehenden Ansprüche, wobei der Prozessor (202) ferner dazu konfiguriert ist, während des Betriebs der TRU (102) im ersten Leistungsmodus zu bestimmen, ob der Geofencing-Modus aktiviert ist oder nicht.

4. System (200) nach einem der vorhergehenden Ansprüche, wobei der Prozessor (202) den Geofencing-Modus der TRU (102) als Reaktion auf eine Eingabe eines Benutzers (116) aktiviert; und/oder
wobei der Prozessor (202) den Geofencing-Modus der TRU (102) als Reaktion auf eine automatische Bestimmung dessen aktiviert, ob sich die TRU innerhalb der ersten geografischen Region befindet.

5. System (200) nach einem der vorhergehenden Ansprüche, wobei die Notleistungsquelle eines von einem Generator und einem Stromnetz (112) an Bord des Wasserfahrzeugs (106) und einer eigenständigen Leistungsspeichervorrichtung (120) umfasst, die mit der TRU (102) verbunden ist.

6. System (200) nach einem der vorhergehenden Ansprüche, wobei der Prozessor (202) ferner dazu konfiguriert ist, auf einer Anzeigevorrichtung (114) Informationen darzustellen, die mit einem aktuellen Betriebsmodus der TRU (102) verknüpft sind, wobei der aktuelle Betriebsmodus einem von dem ersten Leistungsmodus oder dem zweiten Leistungsmodus entspricht; und/oder
wobei der Prozessor (202) ferner dazu konfiguriert ist, eines oder mehrere von einer Ausgabe eines akustischen Melders und einer Ausgabe eines visuellen Melders bereitzustellen, wenn der Prozessor automatisch von dem ersten Leistungsmodus in den zweiten Leistungsmodus für die TRU (102) umschaltet.

7. System (200) nach einem der vorhergehenden Ansprüche, wobei der Prozessor (202) ferner zu Folgendem konfiguriert ist:
Bestimmen, ob sich die TRU (102) außerhalb der ersten geografischen Region befindet; und
automatischen Umschalten von dem zweiten Leistungsmodus in den ersten Leistungsmodus für die TRU mindestens teilweise basierend auf der Bestimmung, dass sich die TRU außerhalb der ersten geografischen Region befindet.

8. System (200) nach einem der vorhergehenden Ansprüche, wobei der Prozessor (202) ferner zu Folgendem konfiguriert ist:
automatischen Umschalten von dem zweiten Leistungsmodus in den ersten Leistungsmodus für die TRU (102) mindestens teilweise basierend auf der Bestimmung, dass die mittels Verbrennung betriebene Leistungsquelle mit der TRU verbunden ist, nach einer positiven Bestimmung, dass sich die TRU außerhalb der ersten geografischen Region befindet.

9. Verfahren (400) zur automatischen Umschaltung einer Transportkühleinheit (TRU) (102) von einem ersten Leistungsmodus in einen zweiten Leistungsmodus, wobei das Verfahren Folgendes umfasst:
Aktivieren eines Geofencing-Modus der TRU, die in dem ersten Leistungsmodus arbeitet, durch eine Geofencing-Aktivierungs-Engine (212), wobei die Aktivierung des Geofencing-Modus eine kontinuierliche und automatische Bestimmung von Geolokalisierungskoordinaten der TRU auslöst;
Bestimmen, ob sich die TRU an Bord eines Wasserfahrzeugs (106) in einer ersten geografischen Region befindet, durch eine Standortbestimmungs-Engine (214) als Reaktion auf die Aktivierung des Geofencing-Modus; und
automatisches Umschalten des TRU von dem ersten Leistungsmodus in den zweiten Leistungsmodus durch eine Leistungsmodusumschalt-Engine (216) basierend auf einer positiven Bestimmung, wobei der erste Leistungsmodus einer mittels Verbrennung betriebenen Leistungsquelle entspricht und der zweite Leistungsmodus einer Notleistungsquelle entspricht.

10. Verfahren (400) nach Anspruch 9, wobei das Verfahren, um zu bestimmen, ob sich die TRU (102) an Bord des Wasserfahrzeugs (106) in der ersten geografischen Region befindet, ferner Folgendes umfasst:
Bestimmen der Geolokalisierungskoordinaten der TRU durch die Standortbestimmungs-Engine (214) basierend auf einem ersten Datensatz, der von einem Geopositionierungsserver (108) empfangen wird; und
Bestimmen durch die Standortbestimmungs-Engine (214), ob die Geolokalisierungskoordinaten einen Standort der TRU innerhalb der ersten geografischen Region anzeigen; optional
wobei der erste Datensatz Koordinaten der TRU (102) von einem globalen Positionierungssystem (GPS) und mit der ersten geografischen Region verknüpfte Geofencing-Metadaten umfasst,
wobei das Verfahren ferner Bestimmen durch die Geofencing-Aktivierungs-Engine umfasst, ob der Geofencing-Modus während des Betriebs der TRU in dem ersten Leistungsmodus aktiviert ist oder nicht.

11. Verfahren (400) nach Anspruch 9 oder 10, ferner umfassend Aktivieren des Geofencing-Modus der TRU (102) durch die Geofencing-Aktivierungs-Engine (212) als Reaktion auf eine automatische Bestimmung durch die Standortbestimmungs-Engine (214), ob sich die TRU innerhalb der ersten geografischen Region befindet.

12. Verfahren nach einem der Ansprüche 9 bis 11, ferner umfassend Darstellen von Informationen, die mit einem aktuellen Betriebsmodus der TRU (102) verknüpft sind, durch eine Benutzerschnittstellen-Engine (UI-Engine) (218) auf einer Anzeigevorrichtung (114), wobei der aktuelle Betriebsmodus einem von dem ersten Leistungsmodus oder dem zweiten Leistungsmodus entspricht; und/oder
ferner umfassend Bereitstellen eines oder mehrerer von einer Ausgabe eines akustischen Melders und einer Ausgabe eines visuellen Melders durch eine audiovisuelle Engine (220) bei automatischer Umschaltung von dem ersten Leistungsmodus in den zweiten Leistungsmodus für die TRU.

13. Verfahren (400) nach einem der Ansprüche 9 bis 12, ferner umfassend:
Bestimmen durch die Standortbestimmungs-Engine (214), ob sich die TRU (102) außerhalb der ersten geografischen Region befindet; und
automatisches Umschalten von dem zweiten Leistungsmodus in den ersten Leistungsmodus für die TRU durch die Leistungsmodusumschalt-Engine (216) mindestens teilweise basierend auf der Bestimmung, dass sich die TRU außerhalb der ersten geografischen Region befindet.

14. Verfahren (400) nach einem der Ansprüche 9 bis 13, ferner umfassend:
automatischen Umschalten von dem zweiten Leistungsmodus in den ersten Leistungsmodus für die TRU (102) durch die Leistungsmodusumschalt-Engine (216) mindestens teilweise basierend auf der Bestimmung, dass die mittels Verbrennung betriebene Leistungsquelle mit der TRU verbunden ist, nach einer positiven Bestimmung, dass sich die TRU außerhalb der ersten geografischen Region befindet.

15. Transportkühleinheit (TRU), umfassend das System nach einem der Ansprüche 1 bis 8.

## Revendications

1. Système (200) pour la commutation automatique d'un premier mode de puissance à un second mode de puissance d'une unité de réfrigération de transport (TRU) (102), le système comprenant :
un processeur (202) couplé de manière communicative à une mémoire (204) stockant des instructions exécutables par le processeur et configurées pour :
activer un mode de géorepérage de la TRU fonctionnant dans le premier mode de puissance, dans lequel l'activation du mode de géorepérage déclenche une détermination continue et automatique de coordonnées de géolocalisation de la TRU ;
déterminer si la TRU se trouve à bord d'un navire maritime (106) dans une première région géographique en réponse à l'activation du mode de géorepérage ; et
commuter automatiquement du premier mode de puissance au second mode de puissance de la TRU sur la base d'une détermination positive, dans lequel le premier mode de puissance correspond à une source de puissance entraînée par combustion et le second mode de puissance correspond à une source de puissance de réserve.

2. Système (200) selon la revendication 1, dans lequel, afin de déterminer si la TRU (102) se trouve à bord du navire maritime (106) dans la première région géographique, le processeur (202) est configuré pour :
déterminer les coordonnées de géolocalisation de la TRU sur la base d'un premier ensemble de données reçues d'un serveur de géopositionnement (108) en communication avec le système ; et
déterminer si les coordonnées de géolocalisation indiquent une localisation de la TRU au sein de la première région géographique ; éventuellement
dans lequel le premier ensemble de données comprend des coordonnées de système de positionnement mondial (GPS) de la TRU (102) et des métadonnées de géorepérage associées à la première région géographique.

3. Système (200) selon une quelconque revendication précédente, dans lequel le processeur (202) est en outre configuré pour déterminer si le mode de géorepérage est activé ou non pendant le fonctionnement de la TRU (102) dans le premier mode de puissance.

4. Système (200) selon une quelconque revendication précédente, dans lequel le processeur (202) active le mode de géorepérage de la TRU (102) en réponse à une entrée d'utilisateur (116) ; et/ou
dans lequel le processeur (202) active le mode de géorepérage de la TRU (102) en réponse à une détermination automatique établissant si la TRU se trouve au sein de la première région géographique.

5. Système (200) selon une quelconque revendication précédente, dans lequel la source de puissance de réserve comprend l'un quelconque d'un générateur et d'un réseau (112) à bord du navire maritime (106), et un dispositif de stockage de puissance autonome (120) associé à la TRU (102).

6. Système (200) selon une quelconque revendication précédente, dans lequel le processeur (202) est en outre configuré pour afficher sur un dispositif d'affichage (114) des informations associées à un mode de fonctionnement actuel de la TRU (102), dans lequel le mode de fonctionnement actuel correspond à l'un du premier mode de puissance ou du second mode de puissance ; et/ou
dans lequel le processeur (202) est en outre configuré pour fournir une ou plusieurs parmi une sortie d'avertisseur audio et une sortie d'avertisseur visuelle lorsque le processeur commute automatiquement du premier mode de puissance au second mode de puissance pour la TRU (102).

7. Système (200) selon une quelconque revendication précédente, dans lequel le processeur (202) est en outre configuré pour :
déterminer si la TRU (102) se trouve en dehors de la première région géographique ; et
commuter automatiquement du second mode de puissance au premier mode de puissance pour la TRU, en se basant au moins en partie sur la détermination que la TRU se trouve en dehors de la première région géographique.

8. Système (200) selon une quelconque revendication précédente, dans lequel le processeur (202) est en outre configuré pour :
commuter automatiquement du second mode de puissance au premier mode de puissance pour la TRU (102) en se basant au moins en partie sur la détermination que la source de puissance entraînée par combustion est connectée à la TRU à la suite d'une détermination positive que la TRU se trouve en dehors de la première région géographique.

9. Procédé (400) pour la commutation automatique d'un premier mode de puissance à un second mode de puissance d'une unité de réfrigération de transport (TRU) (102), le procédé comprenant :
l'activation, par un moteur d'activation de géorepérage (212), d'un mode de géorepérage de la TRU fonctionnant dans le premier mode de puissance, dans lequel l'activation du mode de géorepérage déclenche une détermination continue et automatique de coordonnées de géolocalisation de la TRU ;
la détermination, par un moteur de détermination de localisation (214), de si la TRU se trouve à bord d'un navire maritime (106) dans une première région géographique en réponse à l'activation du mode de géorepérage ; et
la commutation automatique, par un moteur de commutation de mode de puissance (216), du premier mode de puissance au second mode de puissance de la TRU sur la base d'une détermination positive, dans lequel le premier mode de puissance correspond à une source de puissance entraînée par combustion et le second mode de puissance correspond à une source de puissance de réserve.

10. Procédé (400) selon la revendication 9, dans lequel, afin de déterminer si la TRU (102) se trouve à bord du navire maritime (106) dans la première région géographique, le procédé comprend en outre :
la détermination, par le moteur de détermination de localisation (214), des coordonnées de géolocalisation de la TRU sur la base d'un premier ensemble de données reçues d'un serveur de géopositionnement (108) ; et
la détermination, par le moteur de détermination de localisation (214), de si les coordonnées de géolocalisation indiquent une localisation de la TRU au sein de la première région géographique ; éventuellement
dans lequel le premier ensemble de données comprend des coordonnées de système de positionnement mondial (GPS) de la TRU (102) et des métadonnées de géorepérage associées à la première région géographique,
dans lequel le procédé comprend en outre la détermination, par le moteur d'activation de géorepérage, de si le mode de géorepérage est activé ou non pendant le fonctionnement de la TRU dans le premier mode de puissance.

11. Procédé (400) selon la revendication 9 ou 10, comprenant en outre l'activation, par le moteur d'activation de géorepérage (212), du mode de géorepérage de la TRU (102) en réponse à une détermination automatique de la présence de la TRU au sein de la première région géographique par le moteur de détermination de localisation (214).

12. Procédé selon l'une quelconque des revendications 9 à 11, comprenant en outre l'affichage, par un moteur d'interface utilisateur (UI) (218), sur un dispositif d'affichage (114) d'informations associées à un mode de fonctionnement actuel de la TRU (102), dans lequel le mode de fonctionnement actuel correspond à l'un du premier mode de puissance ou du second mode de puissance ; et/ou
comprenant en outre la fourniture d'une ou plusieurs parmi une sortie d'avertisseur audio et une sortie d'avertisseur visuelle, par un moteur audio-visuel (220), lors de la commutation automatique du premier mode de puissance au second mode de puissance pour la TRU.

13. Procédé (400) selon l'une quelconque des revendications 9 à 12, comprenant en outre :
la détermination, par le moteur de détermination de localisation (214), de si la TRU (102) se trouve en dehors de la première région géographique ; et
la commutation automatique, par le moteur de commutation de mode de puissance (216), du second mode de puissance au premier mode de puissance pour la TRU en se basant au moins en partie sur la détermination que la TRU se trouve en dehors de la première région géographique.

14. Procédé (400) selon l'une quelconque des revendications 9 à 13, comprenant en outre :
la commutation automatique, par le moteur de commutation de mode de puissance (216), du second mode de puissance au premier mode de puissance pour la TRU (102) en se basant au moins en partie sur la détermination que la source de puissance entraînée par combustion est connectée à la TRU à la suite d'une détermination positive que la TRU se trouve en dehors de la première région géographique.

15. Unité de réfrigération de transport (TRU) comprenant le système selon l'une quelconque des revendications 1 à 8.
